# EUROPEAN PATENT SPECIFICATION

(11) **EP 0 470 696 B1**
(45) Date of publication and mention of the grant of the patent: **10.05.1995**
(21) Application number: 91305798.0
(22) Date of filing: 26.06.1991
(51) Int. Cl.: F16B 5/02

(54) **Device for fastening two components**
Vorrichtung zum Verbinden von zwei Elementen
Dispositif pour joindre des deux éléments

(30) Priority: 06.08.1990 DE 9011441 U
(43) Date of publication of application: 12.02.1992
(73) Proprietor: EMHART INC., Newark, Delaware 19711 (US)
(72) Inventor: Schäty, Harald, D-35582 Wetzlar (DE)
(74) Representative: Stagg, Diana Christine

(56) References cited:
- DE-A- 2 842 986
- DE-A- 3 728 070
- GB-A- 2 088 508
- GB-A- 2 179 113

## Description

The invention relates to a device for fastening two components to one another, one of which has the form of a plate to which a threaded stud is attached which can pass through the second component and onto which stud a tubular body can be screwed after the two components have been positioned together.

It is known with such devices to use plastics nuts which are provided, in the region of the end turned toward the components to be fixed to one another, with resilient tongues which serve to transmit torque onto the stud and which are inclined inwardly against the screw-tightening direction. With this known arrangement, however, there is a great danger that the flexible tongues cannot be screwed any further onto the stud, particularly if the two components to be joined together already lie on one another, because these tongues yield and can also damage the thread.

Accordingly, it is an object of the present invention to construct a device of the type outlined in the above, such that a tubular body adapted to co-operate with the stud, even after secure tightening, that is after the two components which are to be joined together come into contact, can reliably transmit torque to the stud and therefore provide a very secure hold, the resilient tongues merely having a positioning function.

GB-A-2 179 113 discloses a fastener device for fastening a first component to a threaded stud attached to a second component passing through a hole in said first component comprising a tubular member which can be screwed onto said stud after the stud is positioned through said hole in said first component, said tubular member having resilient tongues on its internal wall which are spaced apart round the periphery in the region of its end portion and which engage the thread of the stud.

According to the present invention we provide a fastener device for fastening a first component to a threaded stud attached to a second component passing through a hole in said first component comprising a tubular member which can be screwed onto said stud after the stud is positioned through said hole in said first component, said tubular member having resilient tongues on its internal wall which are spaced apart round the periphery in the region of its end portion and which engage the thread of the stud characterised in that the said tubular member is also provided with at least three cam-like projections which are axially spaced from the tongues and are integral with the tubular body, their external contours corresponding to the thread depth of the stud and the projections engaging in the stud.

The fastener of the present invention has the advantage, on the one hand, that the stud does not necessarily have to be welded to a plate, but can also be pushed as a plastics body from below through the plate and then through a hole in the component to be fixed to the plate, whereupon the tubular body can simply be pressed onto the free end of the stud. The resilient tongues slide past the first screw threads and hold the tubular body in its starting position. A spanner, for example, can then be applied to the tubular body to screw the tubular body downwards until it makes contact, the cam-shaped projections engaging in the screw thread or threads and taking over the actual transmission of the torque in this case. As these projections are solid in construction and are provided on the internal wall of the tubular body so that they do not yield, there is a guarantee that they always engage with the thread of the stud and the two components are therefore pressed securely together. As the entire tubular body can be produced in one piece by injection moulding, no excessively expensive apparatus is required for producing it.

A preferred embodiment of the invention will now be described in greater detail by way of example with reference to the accompanying drawings, in which:-
Figure 1 shows a plan view of the tubular body,
Figure 2 shows a sectional view along the line II-II of Figure 1, and
Figure 3 shows a sectional view through an arrangement in which the tubular body rests on a stud and two components are fixed on one another.

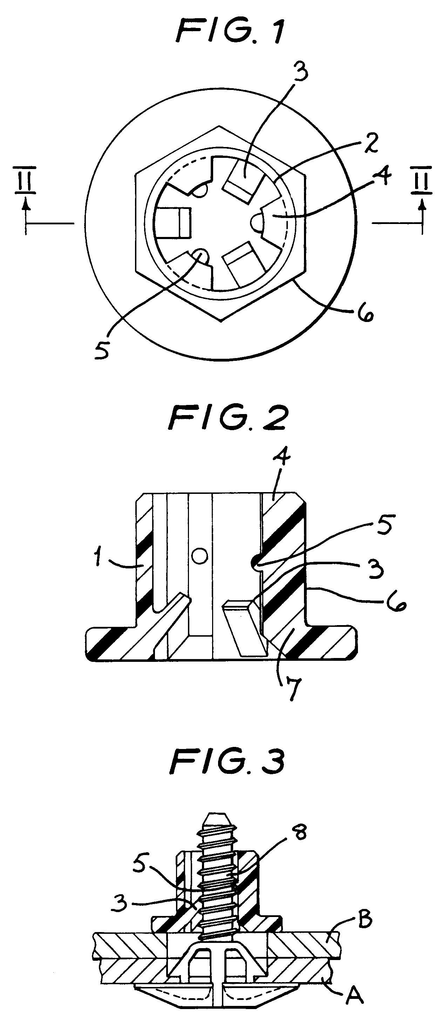

The tubular body 1 (Figure 2) serves, together with a stud 8, to fasten together the two adjacent components A, B. The stud can be welded on the plate-shaped substrate A or can extend through an orifice, the other component B to be secured on this substrate A being pushed over the stud 8 until it rests on the substrate B. The tubular body 1 is then pushed onto the stud which extends through the central orifice in the body 1, as indicated in Figure 1, flexible tongues 3 being provided at the lower end portion of the internal wall of the tubular body 1. In the arrangement described, these tongues serve as means for the pre-positioning of the tubular body 1 on the stud, the tubular body 1 being pushed peripherally on the stud so that the resilient tongues yield and can slide over the individual screw threads of the stud. When no further pressure is exerted on the tubular body 1 in the direction of the components to be secured to one another, the tongues 3 engage in the external thread of the stud.

Webs 4, on whose end faces cam-like projections 5 are constructed, are also provided on the internal wall 2 of the tubular body, as shown in Figure 1. These projections 5 are peripheral and do not lie in a place so they can engage in the screw threads of the stud. After the above-mentioned pre-positioning, a tool can be applied to the external periphery of the tubular body 1, which is hexagonal in the preferred embodiment, and the tubular body can be screwed onto the stud until the components A, B to be fixed on one another can be held in their final position. In this position, the tongues 3 cannot be used to transmit the torque because they escape from the screw threads of the stud owing to their flexibility and therefore lose their original screwing action. The projections 5, which then transmit the torque alone, are hemispherical in the embodiment illustrated, but they can also have any other cross-sectional profile providing that they effectively engage in the thread of the stud such, for example, as a truncated cone, optionally with a curved, internal edge. The webs 4 on which the projections 5 are provided are peripherally spaced from one another, are constructed between respectively adjacent tongues 3 and serve not only as reinforcement but also for effective engagement between the tubular body 1 and the stud 8 so that the components A, B to be fastened, of which, for example, the lower component A can be the body sheet of a motor vehicle while the other component B to be secured there can be a mounting for electric cables and the like, are rigidly joined together. The resilient tongues 3 inclined against the screwing-on direction of the tubular body 1 and also the projections 4 are arranged on the internal wall of the tubular body 1 such that the tongues can initially engage in the thread of the stud while the projections 5 are permanently located in the thread.

In the embodiment illustrated, the tubular body 1 is constructed integrally with the above-mentioned other components and is composed of a suitable plastics material, for example POM.

Figure 3 shows the arrangement when assembled. The stud, on which the tubular body 1 is screwed sufficiently far for the two components A, B to rest completely on one another, is pushed from below through a hole in the body sheet A and through another hole aligned therewith in component B.

More than one row of projections 5 may be provided, the rows being axially and radially spaced from one another.

## Claims

1. A fastener device for fastening a first component to a threaded stud attached to a second component passing through a hole in said first component comprising a tubular member which can be screwed onto said stud after the stud is positioned through said hole in said first component, said tubular member (1) having resilient tongues (3) on its internal wall (2) which are spaced apart round the periphery in the region of its end portion (7) and which engage the thread of the stud characterised in that the said tubular member is also provided with at least three cam-like projections (5) which are axially spaced from the tongues (3) and are integral with the tubular body (1), their external contours corresponding to the thread depth of the stud and the projections (5) engaging in the stud.

2. A device according to claim 1, wherein the cam-like projections (5) are arranged on the internal wall (2) of the tubular body (1), are carried by webs (4) projecting inwardly from the internal wall and project inwardly from the webs (4), and in that the webs (4) are arranged with peripheral spacing from the resilient tongues (3) adjacent to them.

3. A device according to claim 1 or 2, wherein the internal edges of the webs (4) lie in a circle of which the diameter is somewhat greater than that of the circle defined by the internal edges of the tongues (3).

4. A device according to any one of the preceding claims, wherein each projection (5) has the form of a hemisphere.

5. A device according to any one of claims 1 to 3, wherein each projection (5) is in the form of a truncated cone with a curved internal edge.

6. A device according to any one of claims 2 to 5, wherein the webs (4) extend over the entire axial height of the tubular body (1) and in that the projections (5) on the webs (4) are arranged similarly to the pitch line of the thread of the stud.

7. A device according to claim 1, wherein more than one row of projections (5) is provided the rows being axially and radially spaced from one another.

8. A device according to any one of the preceding claims, wherein the tubular body (1), the tongues (3), the projections (5) and the webs (4) are constructed integrally with one another and are composed of plastics material.

## Patentansprüche

1. Befestigungsvorrichtung zum Befestigen einer ersten Komponente an einem Gewindestift, der an einer zweiten Komponente angebracht ist und ein Loch in der ersten Komponente durchdringt, wobei die Vorrichtung ein rohrförmiges Element aufweist, das auf den Stift geschraubt werden kann, nachdem der Stift durch das Loch in der ersten Komponente hindurch positioniert ist, wobei das rohrförmige Element (1) auf seiner Innenwand (2) nachgiebige Zungen (3) besitzt, die um die Peripherie im Bereich des Endabschnittes (7) der Wand beabstandet sind und in das Gewinde des Stiftes eingreifen,
**dadurch gekennzeichnet, daß**
das rohrförmige Element weiter mit mindestens drei nockenförmigen Vorsprüngen (5) versehen ist, die in axialer Richtung von den Zungen (3) beabstandet und integrierender Bestandteil des rohrförmigen Körpers (1) sind, wobei ihre äußeren Konturen der Gewindetiefe des Stiftes und der Vorsprünge (5) entsprechen, die in den Stift eingreifen.

2. Vorrichtung nach Anspruch 1, bei der die nockenförmigen Vorsprünge (5) auf der Innenwand (2) des rohrförmigen Körpers (1) angeordnet sind; Stege (4) tragen, die von der Innenwand her nach innen vorstehen und die aus den Stegen (4) nach innen vorragen; und daß die Stege (4) mit peripheren Abständen zu den nachgiebigen Zungen (3) angeordnet sind, die ihnen benachbart sind.

3. Vorrichtung nach Anspruch 1 oder 2, bei der die inneren Kanten der Stege (4) auf einem Kreis liegen, dessen Durchmesser etwas größer als der des Kreises ist, der durch die inneren Kanten der Zungen (3) definiert ist.

4. Vorrichtung nach irgendeinem vorhergehenden Anspruch, bei dem jeder Vorsprung (5) die Form einer Halbkugel besitzt.

5. Vorrichtung nach irgendeinem der Ansprüche 1 bis 3, bei der jeder Vorsprung (5) die Form eines Kegelstumpfes mit einer gekrümmten inneren Kante besitzt.

6. Vorrichtung nach irgendeinem der Ansprüche 2 bis 5, bei der sich die Stege (4) über die gesamte axiale Höhe des rohrförmigen Körpers (1) erstrecken, und bei der die Vorsprünge (5) auf den Stegen (4) entsprechend der Teilungslinie auf dem Gewinde des Stiftes angeordnet sind.

7. Vorrichtung nach Anspruch 1, bei der mehr als eine Reihe von Vorsprüngen (5) vorgesehen ist, wobei die Reihen in axialer und radialer Richtung untereinander beabstandet sind.

8. Vorrichtung nach irgendeinem vorhergehenden Anspruch, bei der der rohrförmige Körper (1) die Zungen (3), die Vorsprünge (5) und die Stege (4) miteinander ein einheitliches Ganzes bilden und aus Kunststoffmaterial bestehen.

## Revendications

1. Dispositif à organe de fixation destiné à la fixation d'un premier élément à un boulon fixé à un second élément et passant dans un trou du premier élément, comprenant un organe tubulaire qui peut être vissé sur le boulon après crue le boulon a été positionné dans le trou du premier élément, l'organe tubulaire (1) ayant, à sa paroi interne (2), des languettes élastiques (3) qui sont espacées à la périphérie de la région de sa partie d'extrémité (7) et qui sont au contact du filetage du boulon, caractérisé en ce que l'organe tubulaire a aussi a moins trois saillies (5) analogues à des cames qui sont espacées axialement par rapport aux languettes (3) et qui sont venues de matière avec le corps tubulaire (1), leur profil externe correspondant à la profondeur du filetage du boulon et les saillies (5) étant en coopération avec le boulon.

2. Dispositif selon la revendication 1, dans lequel les saillies (5) en forme de came sont placées à la paroi interne (2) du corps tubulaire (1), elles sont supportées par des joues (4) dépassant à l'intérieur de la paroi interne, et elles dépassent des joues (4) vers l'intérieur, et les joues (4) sont distantes périphériquement des languettes élastiques (3) et sont placées près de celles-ci.

3. Dispositif selon la revendication 1 ou 2, dans lequel les bords internes des joues (4) sont placés sur un cercle dont le diamètre est un peu supérieur à celui du cercle délimité par les bords internes des languettes (3).

4. Dispositif selon l'une quelconque des revendications précédentes, dans lequel chaque saillie (5) a la forme d'un hémisphère.

5. Dispositif selon l'une des revendications 1 à 3, dans lequel chaque saillie (5) est sous forme d'un tronc de cône ayant un bord interne courbe.

6. Dispositif selon l'une des revendications 2 à 5, dans lequel les joues (4) sont disposées sur toute la hauteur axiale du corps tubulaire (1), et les saillies (5) placées sur les joues (4) sont disposées de manière analogue par rapport au cercle primitif du filetage du boulon.

7. Dispositif selon la revendication 1, dans lequel plus d'une rangée de saillies (5) sont disposées de manière que les rangées soient espacées axialement et radialement les unes par rapport aux autres.

8. Dispositif selon l'une quelconque des revendications précédentes, dans lequel le corps tubulaire (1), les languettes (3), les saillies (5) et les joues (4) sont construites en une seule pièce et sont composés de matière plastique.
